# EUROPEAN PATENT SPECIFICATION

(11) **EP 2 092 017 B1**
(45) Date of publication and mention of the grant of the patent: **09.10.2013**
(21) Application number: 07862917.7
(22) Date of filing: 13.12.2007
(51) Int. Cl.: C08L 33/00, C09J 133/22, C08L 51/04

(54) **CYANOACRYLATE COMPOSITIONS CONTAINING DISPERSIONS OF CORE SHELL RUBBERS IN (METH)ACRYLATES**
CYANOACRYLATZUSAMMENSETZUNGEN MIT KERN-HÜLLE-KAUTSCHUKDISPERSIONEN IN (METH)ACRYLATEN
COMPOSITIONS DE CYANOACRYLATE CONTENANT DES DISPERSIONS DE CAOUTCHOUC À NOYAU/COQUE DANS DES (MÉTH)ACRYLATES

(30) Priority: 19.12.2006 US 870717 P
(43) Date of publication of application: 26.08.2009
(73) Proprietor: Henkel Corporation, Rocky Hill, CT 06067 (US)
(72) Inventor: ATTARWALA, Shabbir, Simsbury, CT 06070 (US); LI, Ling, Glastonbury, CT 06033 (US); COCCO, John, Vernon, CT 06066 (US)
(74) Representative: Kann, Wolfgang
(86) International application number: PCT/US2007/025598
(87) International publication number: WO 2008/085285

(56) References cited:
- US-A- 4 560 723
- US-A- 5 340 873
- US-A- 5 994 464
- US-A1- 2003 125 443

## Description

### BACKGROUND OF THE INVENTION

### Field of the Invention

The present invention provides a cyanoacrylate composition comprising a cyanoacrylate component; and a core shell rubber component having a particle size in the range of 3 nm to 1,000 nm dispersed in a curable (meth)acrylate matrix.

### Brief Description of Related Technology

Cyanoacrylate compositions are well known as one component reactive adhesives, which are quick bonding and suitable for applications on variety of substrates. See H.V. Coover, D.W. Dreifus and J.T. O'Connor, "Cyanoacrylate Adhesives" in Handbook of Adhesives, 27, 463-77, I. Skeist, ed., Van Nostrand Reinhold, New York, 3rd ed. (1990). See also G.H. Millet, "Cyanoacrylate Adhesives" in Structural Adhesives: Chemistry and Technology, S.R. Hartshorn, ed., Plenun Press, New York, p. 249-307 (1986).

Core shell rubbers are known, and are available for sale commercially from a number of suppliers, including Kaneka Corporation, Hanse Chemie and Wacker Chemie GmbH. Some of these core shell rubbers are available commercially as dispersions in an epoxy resin.

U.S. Patent No. 5,994,464 (Ohsawa) describes and claims a cyanoacrylate adhesive composition comprising (a) a cyanoacrylate monomer, (b) an elastomer having a Tg below -10°C, miscible or compatible with the cyanoacrylate monomer, and (c) a core shell rubber having a core of a polymerized alkyl acrylate, where the alkyl group has 2 to 8 carbon atoms, and, optionally, a copolymerizable monomer and a shell of a polymer of methyl methacrylate and a monomer copolymerizable therewith. The elastomer is selected from an acrylonitrile-butadiene copolymer and a (meth)acrylic ester lower alkene monomer copolymer. The core shell rubber is compatible but not miscible with the cyanoacrylate monomer and is prepared by freezing a latex, melting the frozen latex, and then heat-drying the melted latex.

Notwithstanding the state of the art, it would be desirable to provide cyanoacrylate compositions containing core shell rubbers in a premixed dispersion to provide the end user with additional cyanoacrylate product choices, particularly with cyanoacrylate product choices having improved toughness.

### SUMMARY OF THE INVENTION

The present invention provides a cyanoacrylate composition comprising a cyanoacrylate component; and a core shell rubber component having a particle size in the range of 3 nm to 1,000 nm dispersed in a curable (meth)acrylate matrix.

More specifically, the core shell rubber component should have a particle where at least 90% of the particles have a particle size distribution in the range of 3 nm to 500 nm.

In addition, to form the premix the core shell rubber component should be dispersed in the curable (meth)acrylate matrix in an amount in the range of 5% by weight to about 75% by weight, such as in the range of 15% by weight to about 65% by weight, desirably in an amount in the range of 25% by weight to about 50% by weight.

The core shell rubber component/curable (meth)acrylate matrix premix dispersion should be present with the cyanoacrylate component in an amount in the range of 5% by weight to about 65% by weight, such as in an amount in the range of 10% by weight to about 50% by weight, desirably in an amount in the range of 15% by weight to about 35% by weight and more desirably in an amount in the range of 20% by weight to about 25% by weight%.

### DETAILED DESCRIPTION OF THE INVENTION

The present invention provides a cyanoacrylate composition comprising a cyanoacrylate component; and a core shell rubber component having a particle size in the range of 3 nm to 1,000 nm dispersed in a curable (meth)acrylate matrix.

More specifically, the core shell rubber component should have a particle where at least 90% of the particles have a particle size distribution in the range of 3 nm to 500 nm.

The nano core shell rubber should have a core of a rubbery polymer and a shell of a glassy polymer and being compatible but not miscible with the cyanoacrylate monomer.

Such nano core shell rubbers generally have a core comprised of a polymeric material having elastomeric or rubbery properties (i.e., a glass transition temperature less than about 0°C, e.g., less than about -30°C) surrounded by a shell comprised of a non-elastomeric polymeric material (i.e., a thermoplastic or thermoset/crosslinked polymer having a glass transition temperature greater than ambient temperatures, e.g., greater than about 50°C). For example, the core may be comprised of a diene homopolymer or copolymer (for example, a homopolymer of butadiene or isoprene, a copolymer of butadiene or isoprene with one or more ethylenically unsaturated monomers such as vinyl aromatic monomers, (meth)acrylonitrile, (meth)acrylates, or the like) while the shell may be comprised of a polymer or copolymer of one or more monomers such as (meth)acrylates (e.g., methyl methacrylate), vinyl aromatic monomers (e.g., styrene), vinyl cyanides (e.g., acrylonitrile), unsaturated acids and anhydrides (e.g., acrylic acid), (meth)acrylamides, and the like having a suitably high glass transition temperature. Other rubbery polymers may also be suitably be used for the core, including polybutylacrylate or polysiloxane elastomer (e.g., polydimethylsiloxane, particularly crosslinked polydimethylsiloxane). The rubber particle may be comprised of more than two layers (e.g., a central core of one rubbery material may be surrounded by a second core of a different rubbery material or the rubbery core may be surrounded by two shells of different composition or the rubber particle may have the structure soft core, hard shell, soft shell, hard shell). In one embodiment of the invention, the rubber particles used are comprised of a core and at least two concentric shells having different chemical compositions and/or properties. Either the core or the shell or both the core and the shell may be crosslinked (e.g., ionically or covalently). The shell may be grafted onto the core. The polymer comprising the shell may bear one or more different types of functional groups (e.g., epoxy groups) that are capable of interacting with other components of the compositions of the present invention.

Typically, the core will comprise from about 50 to about 95 percent by weight of the rubber particles while the shell will comprise from about 5 to about 50 percent by weight of the rubber particles.

The core shell rubber particles are on the nano scale size. That is, the rubber particles have an average diameter of less than about 500 nm, such as less than about 200 nm, desirably in the range of 25 to 100 nm.

Methods of preparing rubber particles having a core-shell structure are well-known in the art and are described, for example, in U.S. Patent Nos. 4,419,496, 9, 778, 851, 5, 981, 659, 6, 111, 015, 6, 197, 142 and 6,180,693, each of which being incorporated herein by reference in its entirety.

Rubber particles having a core-shell structure may be prepared as a masterbatch where the rubber particles are dispersed in a matrix. In the context of the present invention, the matrix is a (meth)acrylate matrix. For example, the rubber particles typically are prepared as aqueous dispersions or emulsions. Such dispersions or emulsions may be combined with the desired epoxy resin or mixture of epoxy resins and the water and other volatile substances removed by distillation or the like. One method of preparing such masterbatches is described in more detail in International Patent Publication No. WO 2004/108825, incorporated herein by reference in its entirety. For example, an aqueous latex of rubber particles may be brought into contact with an organic medium having partial solubility in water and then with another organic medium having lower partial solubility in water than the first organic medium to separate the water and to provide a dispersion of the rubber particles in the second organic medium. This dispersion may then be mixed with the desired epoxy resin(s) and volatile substances removed by distillation or the like to provide the masterbatch.

Particularly suitable dispersions of rubber particles having a core shell structure in an epoxy resin matrix are available from Kaneka Corporation, such as Kaneka MX-120 (masterbatch of 25% by weight nano-sized core-shell rubber in a diglycidyl ether of bisphenol A matrix) and Kaneka MX-156. Here, again the matrix is a (meth)acrylate matrix.

The core phase and the shell phase of the core shell rubber may be grafted to one another. These nano core shell rubbers may be prepared by a continuous, multi-step emulsion polymerization method, what is called a multi-step seed emulsion polymerization method, where the polymer in a posterior step is subjected to seed polymerization successively in the presence of the polymer of a prior step. First, seed latex is prepared by emulsion polymerization, then a core portion is prepared by seed polymerization, and the seed polymerization is then repeated, whereby a core shell rubber can be obtained.

Thus, the polymerization of seed particles may be accomplished using a monomer, such as methyl methacrylate or ethyl acrylate.

The polymerization of the core may be accomplished using emulsion polymerization of a conjugated diene or an alkyl acrylate monomer (having an alkyl group with 2 to 8 carbon atoms), in the presence of seed latex. In this way, a core based on a rubbery polymer having a glass transition temperature (Tg) below room temperature, preferably below -10°C. Examples of the conjugated diene include, for example, butadiene, isoprene, or chloroprene, with butadiene being particularly desirable. Examples of the alkyl acrylate include, for example, ethyl acrylate, propyl acrylate, butyl acrylate, cyclohexyl acrylate, or 2-ethylhexyl acrylate, with butyl acrylate being particularly desirable.

In the copolymerization of the core, together with the alkyl acrylate there may be used a monomer copolymerizable therewith, examples of which include aromatic vinyl and vinylidene monomers such as styrene, vinyltoluene, and methylstyrene, vinyl cyanide and vinylidene cyanide monomers, such as acrylonitrile and methacrylonitrile, and alkyl methacrylates such as methyl methacrylate and butyl methacrylate.

A crosslinkable monomer and a graft monomer are desirable as comonomers. As examples of the crosslinkable monomer are aromatic divinyl monomers such as divinylbenzene, as well as alkane polyol polyacrylates or alkane polyol polymethacrylates such as ethylene glycol diacrylate, ethylene glycol dimethacrylate, butylene glycol diacrylate, hexanediol dimethacrylate, oligoethylene glycol diacrylate, oligoethylene glycol dimethacrylate, trimethylolpropane diacrylate, trimethylolpropane dimethacrylate, trimethylolpropane triacrylate, and trimethylolpropane trimethacrylate, with butylene glycol diacrylate and hexanediol diacrylate being particularly desirable. As examples of the graft monomer are unsaturated carboxylic acid allyl esters such as allyl acrylate, allyl methacrylate, diallyl maleate, diallyl fumarate, and diallyl itaconate, with allyl methacrylate being particularly desirable.

It is preferable that the proportion of the rubbery polymer core be in the range of 50 to 90% by weight of the whole of the core shell rubber.

In the preparation of the core shell rubber, as a polymerization initiator in the monomer emulsion polymerization there may be used, for example, persulfate initiators such as sodium persulfate and potassium persulfate, azo type initiators such as azobisisobutyronitrile, 2,2'-azobis(2-amidinopropane)dihydrochloride, 2,2'-azobis (2-imidazoline-2-yl)propane, and dimethyl methylpropaneisobutyrate, and organic peroxide initiators such as cumene hydroperoxide and diisopropyl-benzene hydroperoxide.

The polymer shell is prepared by polymerizing methyl methacrylate or styrene and a monomer copolymerizable therewith in the presence of the core latex to form a glassy polymer having a Tg above room temperature, preferably above 60°C, as an outermost shell. Examples of the monomer copolymerizable with methyl methacrylate are mentioned vinyl polymerizable monomers such as alkyl acrylates, e.g. ethyl acrylate and butyl acrylate, alkyl methacrylates, e.g. ethyl methacrylate and butyl methacrylate, aromatic vinyl and vinylidene monomers, e.g. styrene, vinyltoluene and methylstyrene, and vinyl cyanide and vinylidene cyanide monomers, e.g. acrylonitrile and methacrylonitrile. Particularly preferred are ethyl acrylate, styrene and acrylonitrile. As examples of the monomer copolymerizable with styrene are mentioned vinyl polymerizable monomers such as alkyl acrylates, e.g. methyl acrylate and ethyl acrylate, alkyl methacrylates, e.g. methyl methacrylate and ethyl methacrylate, aromatic vinyl and vinylidene monomers, e.g. vinyltoluene and methylstyrene, and vinyl cyanide and vinylidene cyanide monomers, e.g. acrylonitrile and methacrylonitrile, with methyl methacrylate and acrylonitrile being particularly preferred.

In the core shell rubber prepared according to the present invention there may be present a polymer layer or layers, namely, intermediate layer or layers, between the core and the final polymer layer, or the shell. After the formation of seed or core, such an intermediate layer can be formed by suitably selecting, for example, a polymerizable monomer containing a functional group such as glycidyl methacrylate or unsaturated carboxylic acid, a polymerizable monomer which forms a glassy polymer such as methyl methacrylate, or a polymerizable monomer which forms a rubbery polymer such as butyl acrylate, and then subjecting the thus-selected monomer to emulsion polymerization.

For instance, the core may be formed predominantly from feed stocks of polybutadiene, polyacrylate, polybutadiene/acrylonitrile mixture, polyols and/or polysiloxanes or any other monomers that give a low glass transition temperature. The outer shells may be formed predominantly from feed stocks of polymethylmethacrylate, polystyrene or polyvinyl chloride or any other monomers that give a higher glass transition temperature.

The core shell rubber made in this way are may be dispersed in a (meth)acrylate matrix, with the (meth)acrylate selected from (meth)acrylates that are liquid at the preparation or formulating temperature. For instance, examples of (meth)acrylates include (Meth)acrylate monomers suitable for use as the (meth)acrylate component in the present invention may be chosen from a wide variety of materials, such as these represented by H₂C=CGCO₂R⁸, where G may be hydrogen, halogen or alkyl groups having from 1 to about 4 carbon atoms, and R⁸ may be selected from alkyl, cycloalkyl, alkenyl, cycloalkenyl, alkaryl, aralkyl or aryl groups having from 1 to about 16 carbon atoms, any of which may be optionally substituted or interrupted as the case may be with silane, silicon, oxygen, halogen, carbonyl, hydroxyl, ester, carboxylic acid, urea, urethane, carbonate, amine, amide, sulfur, sulfonate, sulfone and the like.

Mono-functional (meth)acrylates like hydroxyethyl (meth)acrylate ("HEMA"), hydroxypropyl (meth)acrylate ("HPMA"), isobornylacrylate ("IBOA"), and the like may be suitable for use herein, particularly in combination with a di-or tri-functional (meth)acrylate, as set forth below.

Additional (meth)acrylate monomers suitable for use herein include polyfunctional (meth)acrylate monomers, such as di-or tri-functional (meth)acrylates like polyethylene glycol di(meth)acrylates ("PEGMA"), tetrahydrofuran (meth)acrylates and di(meth)acrylates, hexanediol di(meth)acrylate, trimethylol propane tri(meth)acrylates ("TMPTMA"), diethylene glycol dimethacrylate, triethylene glycol dimethacrylates ("TRIEGMA"), tetraethylene glycol di(meth)acrylates, dipropylene glycol di(meth)acrylates, di-(pentamethylene glycol) di(meth)acrylates, tetraethylene diglycol di(meth)acrylates, diglycerol tetra(meth)acrylates, tetramethylene di(meth)acrylates, ethylene di(meth)acrylates, neopentyl glycol di(meth)acrylates, and bisphenol-A mono and di(meth)acrylates, such as ethoxylated bisphenol-A (meth)acrylate ("EBIPMA"), and bisphenol-F mono and di(meth)acrylates, such as ethoxylated bisphenol-A (meth)acrylate.

Still other (meth)acrylate monomers that may be used herein include silicone (meth)acrylate moieties ("SiMA"), such as those taught by and claimed in U.S. Patent No. 5,605,999 (Chu), the disclosure of which is hereby expressly incorporated herein by reference. Of course, combinations of these (meth)acrylate monomers may also be used.

The core shell rubber may be present in the (meth)acrylate dispersion in an amount in the range of about 5 to about 50% by weight, with about 15 to about 25% by weight being desirable.

Many of the core shell rubbers available from Kaneka are believed to have a core made from a copolymer of (meth)acrylate-butadiene-styrene ("MBS"), where the butadiene is the primary component in the phase separated particles, dispersed in epoxy resins. Other commercially available masterbatches of core-shell rubber particles dispersed in epoxy resins include GENIOPERL M23A (a dispersion of 30% by weight core shell rubber in an aromatic epoxy resin based on bisphenol A diglycidyl ether; the core shell rubbers have an average diameter of ca. 100 nm and contain a crosslinked silicone elastomer core onto which an epoxy-functional acrylate copolymer has been grafted); the silicone elastomer core represents about 65% weight of the core shell rubber), available from Wacker Chemie GmbH, Germany.

In addition, the core shell rubber component should be dispersed in the curable (meth)acrylate matrix in an amount in the range of 1% by weight to about 95% by weight, such as in the range of 15% by weight to about 75% by weight, desirably in an amount in the range of 20% by weight to about 60% by weight.

The core shell rubber component/curable (meth)acrylate matrix dispersion should be present with the cyanoacrylate component in an amount in the range of 18% by weight to about 18% by weight, such as in an amount in the range of 2% by weight to about 15% by weight, desirably in an amount in the range of 4% by weight to about 12% by weight.

The cyanoacrylate component includes at least one -cyanoacrylate monomer of the formula: 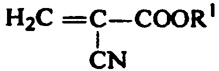 where R¹ represents a straight chain or branched chain alkyl group having 1 to 12 carbon atoms (which may be substituted with a substituent such as a halogen atom or an alkoxy group), a straight chain or branched chain alkenyl group having 2 to 12 carbon atoms, a straight chain or branched chain alkynyl group having 2 to 12 carbon atoms, a cycloalkyl group, an aralkyl group or any aryl group. Specific examples of R¹ are a methyl group, an ethyl group, an n-propyl group, an isopropyl group, an n-butyl group, an isobutyl group, a pentyl group, a hexyl group, an allyl group, a methallyl group, a crotyl group, a propargyl group, a cyclohexyl group, a benzyl group, a phenyl group, a cresyl group, a 2-chloroethyl group, a 3-chloropropyl group, a 2-chlorobutyl group, a trifluoroethyl group, a 2-methoxyethyl group, a 3-methoxybutyl group and a 2-ethoxyethyl group. Ethyl cyanoacrylate is a particularly desirable choice for use in the inventive compositions.

An anionic polymerization inhibitor is generally added to -cyanoacrylate compositions in an amount from about 0.0001 to 10% by weight based on the total weight of the composition, to increase the stability of the composition during storage. Examples of useful inhibitors include sulfur dioxide, sulfur trioxide, nitric oxide, hydrogen fluoride, organic sultone inhibitors, boron trifluoride and methane sulfonic acid, aromatic sulfonic acids, aliphatic sulfonic acids, and sulfones. The amount of inhibitor will suitably be any convenient amount in order to slow down cure of the composition. Desirably, inhibitors of anionic polymerization are present at about 0.0001% to about 0.1% by weight based on the total weight of the composition.

A radical polymerization inhibitor is generally added to -cyanoacrylate compositions as well, in an amount from about 0.001 to 2.0%, particularly 0.03 to 0.5%, based on the total weight of the composition, for the purpose of capturing radicals which are formed by light during storage. Such inhibitors are ordinarily of the phenolic type include, for example, hydroquinone and hydroquinone monomethyl ether. Other inhibitors suitable for use herein include butylated hydroxytoluene and butylated hydroxyanisole.

A thickener may be added to increase the viscosity of the -cyanoacrylate composition. Various polymers can be used as thickeners, and examples include poly(methyl methacrylate) ("PMMA"), poly(ethyl methacrylate) ("PEMA"), methacrylate-type copolymers, acrylic rubbers, cellulose derivatives, polyvinyl acetate and poly(-cyanoacrylate). A suitable amount of thickener is generally about 0.01 to 30% by weight, preferably 5.0 to 25% by weight, based on the total weight of the cyanoacrylate composition.

Plasticizers may also be added to the cyanoacrylate component to further aid in durability and impact, heat, and moisture resistance. The plasticizer is preferably present in an amount of about 0.05% to about 25%, more preferably about 1% to about 15%, such as about 5% to about 10%, by weight based on the total weight of the composition.

Perfumes, dyes, pigments, and the like may be added to the inventive composition depending on use purposes in amounts which do not adversely affect the stability of the -cyanoacrylate monomer. The use of such additives is within the skill of those practicing in the cyanoacrylate adhesive art and need not be detailed herein.

Accelerators that may be useful in the cyanoacrylate compositions include for example calixarenes, oxacalixarenes, and combinations thereof. Of the calixarenes and oxacalixarenes, many are known, and are reported in the patent literature. See e.g. U.S. Patent Nos. 4, 556, 700, 9, 622, 919, 9, 636, 539, 9, 695, 615, 4,718,966, and 4,855,461, the disclosures of each of which are hereby expressly incorporated herein by reference.

Another potentially useful accelerator component is a crown ether. A host of crown ethers are known. For instance, examples which may be used herein either individually or in combination, or in combination with the calixarenes and oxacalixarenes described above include 15-crown-5, 18-crown-6, dibenzo-18-crown-6, benzo-15-crown-5, dibenzo-24-crown-8, dibenzo-30-crown-10, tribenzo-18-crown-6, asym-dibenzo-22-crown-6, dibenzo-14-crown-4, dicyclohexyl-18-crown-6, dicyclohexyl-24-crown-8, cyclohexyl-12-crown-4, 1,2-decalyl-15-crown-5, 1,2-naphtho-15-crown-5, 3,4,5-naphthyl-16-crown-5, 1,2-methyl-benzo-18-crown-6, 1,2-methylbenzo-5, 6-methylbenzo-18-crown-6, 1,2-t-butyl-18-crown-6, 1,2-vinylbenzo-15-crown-5, 1,2-vinylbenzo-18-crown-6, 1,2-t-butyl-cyclohexyl-18-crown-6, asym-dibenzo-22-crown-6 and 1,2-benzo-1,4-benzo-5-oxygen-20-crown-7. See U.S. Patent No. 4,837,260 (Sato), the disclosure of which is hereby expressly incorporated here by reference.

Other suitable accelerators include those described in U.S. Patent No. 5,312,864 (Wenz), which are hydroxyl group derivatives of an α-, β- or -cyclodextrin which is at least partly soluble in the cyanoacrylate; in U.S. Patent No. 4,906,317 (Liu), which are silacrown compounds to accelerate fixturing and cure on de-activating substrates such as wood, examples of which are within the following structure: 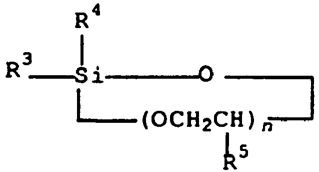 where R³ and R⁴ are organo groups which do not themselves cause polymerization of the cyanoacrylate monomer, R⁵ is H or CH₃ and n is an integer of between 1 and 4. Examples of suitable R³ and R⁴ groups are R groups, alkoxy groups such as methoxy, and aryloxy groups such as phenoxy. The R³ and R⁴ groups may contain halogen or other substituents, an example being trifluoropropyl. However, groups not suitable as R⁴ and R⁵ groups are basic groups such as amino, substituted amino and alkylamino.

Specific examples of silacrown compounds useful in the inventive compositions include: 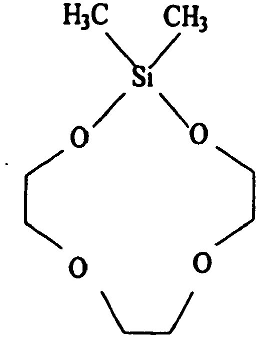 dimethylsila-11-crown-4; 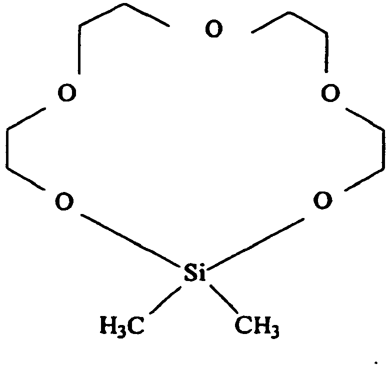 More specifically, the '910 patent notes that as toughening additives for cyanoacrylates, acrylic rubbers; polyester urethanes; ethylene-vinyl acetates; fluorinated rubbers; isoprene-acrylonitrile polymers; chlorosulfonated polyethylenes; and homopolymers of polyvinyl acetate were found to be particularly useful.

The elastomeric polymers are described in the '910 patent as either homopolymers of alkyl esters of acrylic acid; copolymers of another polymerizable monomer, such as lower alkenes, with an alkyl or alkoxy ester of acrylic acid; and copolymers of alkyl or alkoxy esters of acrylic acid. Other unsaturated monomers which may be copolymerized with the alkyl and alkoxy esters of acrylic include dienes, reactive halogen-containing unsaturated compounds and other acrylic monomers such as acrylamides.

One group of elastomeric polymers are copolymers of methyl acrylate and ethylene, manufactured by DuPont, under the name of VAMAC, such as VAMAC N123 and VAMAC B-124. VAMAC N123 and VAMAC B-124 are reported by DuPont to be a master batch of ethylenelacrylic elastomer.

Henkel Corporation (as the successor to Loctite Corporation) has sold for a number of years since the filing of the '910 patent rubber toughened cyanocrylate adhesive products under the tradename BLACK MAX, which employ as the rubber toughening component the DuPont materials called VAMAC B-124 and N123. Thus, these DuPont materials may be used to co-toughen the inventive composition. In addition, Henkel has sold in the past clear and substantially coloriess rubber toughened cyanoacrylate adhesive products, namely, LOCTITE 4203, 4204 and 4205, which employ as the rubber toughening component the DuPont material, VAMAC G. VAMAC G may be used to co-toughen the inventive composition, as well.

VAMAC VCS rubber appears to be the base rubber, from which the remaining members of the VAMAC product line are compounded. VAMAC VCS (also called VAMAC MR) is a reaction product of the combination of ethylene, methyl acrylate and monomers having carboxylic acid cure sites, which once formed is then substantially free of processing aids such as the release agents octadecyl amine, complex organic phosphate esters and/or stearic acid, and anti-oxidants, such as substituted diphenyl amine.

Recently, DuPont has provided to the market under the trade designation VAMAC VMX 1012 and VCD 6200, which are rubbers made from ethylene and methyl acrylate. It is believed that the VAMAC VMX 1012 rubber possesses little to no carboxylic acid in the polymer backbone. Like the VAMAC VCS rubber, the VAMAC VMX 1012 and VCD 6200 rubbers are substantially free of processing aids such as the release agents octadecyl amine, complex organic phosphate esters and/or stearic acid, and anti-oxidants, such as substituted diphenyl amine, noted above.

The inventive composition may also be co-toughened with a rubber toughening component having (a) reaction products of the combination of ethylene, methyl acrylate and monomers having carboxylic acid cure sites, (b) dipolymers of ethylene and methyl acrylate, and combinations of (a) and (b), which once the reaction products and/or dipolymers are formed are then substantially free of processing aids, such as the release agents octadecyl amine (reported by DuPont to be available commercially from Akzo Nobel under the tradename ARMEEN 18D), complex organic phosphate esters (reported by DuPont to be available commercially from R.T. Vanderbilt Co., Inc. under the tradename VANFRE VAM), stearic acid and/or polyethylene glycol ether wax, and anti-oxidants, such as substituted diphenyl amine (reported by DuPont to be available commercially from Uniroyal Chemical under the tradename NAUGARD 445).

In addition, a polymer material constructed from polymethyl methacrylate ("PMMA") and polybutyl acrylate ("PB") may be involved in the inventive composition as a co-toughener. Polymer materials within this class are referred to as polymethylmethacrylate-block-polybutylacrylate-block polymethylmethacrylate copolymers ("MAM").

As reported by the manufacturer, Arkema Group, MAM is a triblock copolymer, consisting of about 70% PMMA and 30% PB. MAM is constructed from distinct segments, which provides for the ability to self-assemble at the molecular scale. That is, M confers hardness to the polymer and A confers elastomeric properties to the polymer. A hard polymer segment tends to be soluble in cyanoacrylates, whereas the elastomeric segments provides toughness to the polymeric cyanoacrylate which forms upon cure. MAM also reinforces mechanical properties, without compromising inherent physical properties. MAM is commercially available from the Arkema Group, under the tradename Nanostrength®, with at present two different grades available, i.e., M-22 and M-42.

Arkema promotes the Nanostrength® product line as an acrylic block copolymer that is miscible with many polymers, most of which according to the manufacturer are major industrial epoxy resins. See also U.S. Patent No. 6,894,113, where in its abstract the '113 patent speaks to a thermoset material with improved impact resistance. The impact resistance is derived from 1 to 80% of an impact modifier comprising at least one copolymer comprising S-B-M, B-M and M-B-M blocks, where each block is connected to the other by means of a covalent bond or of an intermediate molecule connected to one of the blocks via a covalent bond and to the other block via another covalent bond, M is a PMMA homopolymer or a copolymer comprising at least 50% by weight of methyl methacrylate, B is incompatible with the thermoset resin and with the M block and its glass transition temperature Tg is less than the operating temperature of the thermoset material, and S is incompatible with the thermoset resin, the B block and the M block and its Tg or its melting temperature is greater than the Tg of B. S is advantageously reported as being polystyrene and B polybutadiene.

When used, the co-toughener may be put in an amount of up to about 10% by weight, such as up to about 5% by weight, desirably below that 2% by weight to 4% by weight.

The following examples should and in further describing the present invention.

### EXAMPLES

Here, nano core shell rubber dispersions were prepared as premixes in a (meth)acrylate matrix for addition into a cyanoacrylate, destabilized with 10 ppm of boron trifluoride. The (meth)acrylate matrix chosen is PEGMA. Sample No. 1 is used as one control, as it contains no nano core shell rubber and Sample No. 7 is used as another control as it contains no PEGMA.

| | **Sample No./Amt (grams)** | | | | | | |
|---|---|---|---|---|---|---|---|
| | **1** | **2** | **3** | **4** | **5** | **6** | **7** |
| PEGMA | 100 | 80 | 60 | 50 | 40 | 20 | 0 |
| Nano Core Shell Rubber | 0 | 20 | 40 | 50 | 60 | 80 | 100 |
| Total | 100 | 100 | 100 | 100 | 100 | 100 | 100 |

Thus, the nano core shell rubber is present in the premixed dispersions in an amount respectively of 0, 20, 40, 50, 60, and 80 weight percent in the (meth)acrylate matrix (here, PEGMA) and as a control 100 weight percent.

Cyanoacrylate compositions are formulated with the premix dispersions identified above, each in a weight percentage of 80% cyanoacrylate and 20% premix dispersion. Thus, to ethyl cyanoacrylate (0.8 grams) is added each of the premix dispersions (i.e., Sample Nos. 1-7) in an amount of 0.2 grams, yielding the following concentrations of nano core shell rubber:
Formulation 1: 0% nano core shell rubber
Formulation 2: 4% nano core shell rubber
Formulation 3: 8% nano core shell rubber
Formulation 4: 10% nano core shell rubber
Formulation 5: 12% nano core shell rubber
Formulation 6: 16% nano core shell rubber
Formulation 7: 20% nano core shell rubber

Whereas Formulation 1 shows no toughening effect due to the nano core shell rubber since none is present, Formulation 7 shows an agglomeration of the nano core shell rubber, resulting in poor mixing and lack of homogeneity. Formulations 2-6 show varying degrees of toughness due to the nano core shell rubber without the agglomeration effect.

## Claims

1. A cyanoacrylate composition comprising:
A cyanoacrylate component; and
A core shell rubber component dispersed in a curable (meth)acrylate matrix, wherein the core shell rubber component has a particle size in the range of 3 nm to 100 nm.

2. The cyanoacrylate composition of Claim 1, wherein the core shell rubber component is dispersed in the curable (meth)acrylate matrix in an amount in the range of 1% by weight to 95% by weight.

3. The cyanoacrylate composition of Claim 1, wherein the core shell rubber component is dispersed in the curable (meth)acrylate matrix in an amount in the range of 15% by weight to 75% by weight.

4. The cyanoacrylate composition of Claim 1, wherein the core shell rubber component is dispersed in the curable (meth)acrylate matrix in an amount in the range of 20% by weight to 60% by weight.

5. The cyanoacrylate composition of Claim 1, wherein the core shell rubber component/curable (meth)acrylate matrix dispersion is present with the cyanoacrylate component in an amount in the range of 1% by weight to 18% by weight.

6. The cyanoacrylate composition of Claim 1, wherein the core shell rubber component/curable matrix dispersion is present with the cyanoacrylate component in an amount in the range of 2% by weight to 15% by weight.

7. The cyanoacrylate composition of Claim 1, wherein the core shell rubber component/curable matrix dispersion is present with the cyanoacrylate component in an amount in the range of 4% by weight to 12% by weight.

8. The cyanoacrylate composition of Claim 1, wherein the cyanoacrylate component comprises one or more members selected from the group consisting of at least one α-cyanoacrylate monomer of the formula: 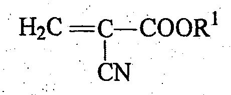 where R¹ represents a straight chain or branched chain alkyl group having 1 to 12 carbon atoms (which may be substituted with a substituent such as a halogen atom or an alkoxy group), a straight chain or branched chain alkenyl group having 2 to 12 carbon atoms, a straight chain or branched chain alkynyl group having 2 to 12 carbon atoms, a cycloalkyl group, an aralkyl group or any aryl group.

9. The cyanoacrylate composition of Claim 1, wherein the cyanoacrylate composition further comprises a co-toughener selected from the group consisting of
- elastomeric polymers of a lower alkene monomer and (i) acrylic acid esters, (ii) methacrylic acid esters or (iii) vinyl acetate,
- reaction products of the combination of ethylene, methyl acrylate and monomers having carboxylic acid cure sites, which once formed are then substantially free of processing aids and anti-oxidants,
- reaction products of the combination of ethylene, methyl acrylate and monomers having carboxylic acid cure sites, dipolymers of ethylene and methyl acrylate, and
- polymer component, constructed from polymethyl methacrylate and polybutyl acrylate segments and combinations thereof.

10. The cyanoacrylate composition of Claim 1, wherein the cyanoacrylate composition further comprises an accelerator selected from the group consisting of crown ethers, cyclodextrines, silacrowns, calixarenes and crown ethers.

## Patentansprüche

1. Cyanoacrylatzusammensetzung, umfassend:
einen Cyanoacrylatbestandteil; und
einen Kern-Hülle-Kautschukbestandteil der in einer härtbaren (Meth)acrylatmatrix dispergiert ist, wobei der Kern-Hülle-Kautschukbestandteil eine Partikelgröße in einem Bereich von 3 nm bis 100 nm hat.

2. Cyanoacrylatzusammensetzung nach Anspruch 1, wobei der Kern-Hülle-Kautschukbestandteil in einer Menge in einem Bereich von 1 Gewichts-% bis etwa 95 Gewichts-% in der härtbaren (Meth)acrylatmatrix dispergiert ist.

3. Cyanoacrylatzusammensetzung nach Anspruch 1, wobei der Kern-Hülle-Kautschukbestandteil in einer Menge in einem Bereich von 15 Gewichts-% bis etwa 75 Gewichts-% in der härtbaren (Meth)acrylatmatrix dispergiert ist.

4. Cyanoacrylatzusammensetzung nach Anspruch 1, wobei der Kern-Hülle-Kautschukbestandteil in einer Menge in einem Bereich von 20 Gewichts-% bis etwa 60 Gewichts-% in der härtbaren (Meth)acrylatmatrix dispergiert ist.

5. Cyanoacrylatzusammensetzung nach Anspruch 1, wobei die Dispersion aus Kern-Hülle-Kautschukbestandteil / härtbarer (Meth)acrylatmatrix derart vorliegt, dass die Menge an Cyanoacrylatbestandteil in der Größenordnung von 1 Gewichts-% bis 18 Gewichts-% liegt.

6. Cyanoacrylatzusammensetzung nach Anspruch 1, wobei die Dispersion aus Kern-Hülle-Kautschukbestandteil / härtungsfähiger (Meth)acrylatmatrix derart vorliegt, dass die Menge an Cyanoacrylatbestandteil in einem Bereich von 2 Gewichts-% bis etwa 15 Gewichts-% liegt.

7. Cyanoacrylatzusammensetzung nach Anspruch 1, wobei die Dispersion aus Kern-Hülle-Kautschukbestandteil / härtbarer (Meth)acrylatmatrix derart vorliegt, dass die Menge an Cyanoacrylatbestandteil einem Bereich von 4 Gewichts-% bis etwa 12 Gewichts-% liegt.

8. Cyanoacrylatzusammensetzung nach Anspruch 1, wobei der Cyanoacrylatbestandteil einen oder mehrere Bausteine umfasst, die aus der Gruppe gewählt sind, die aus mindestens einem α-Cyanoacrylatmonomer der folgenden Formel besteht: 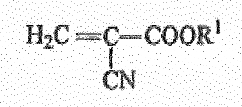 wobei R¹ für eine geradkettige oder verzweigtkettige Alkylgruppe mit 1 bis 12 Kohlenstoffatomen (welche mit einem Substituenten wie etwa einem Halogenatom oder einer Alkoxygruppe substituiert sein kann), eine geradkettige oder verzweigtkettige Alkenylgruppe mit 2 bis 12 Kohlenstoffatomen, eine geradkettige oder verzweigtkettige Alkinylgruppe mit 2 bis 12 Kohlenstoffatomen, eine Cycloalkylgruppe, eine Aralkylgruppe oder eine beliebige Arylgruppe stehen kann.

9. Cyanoacrylatzusammensetzung nach Anspruch 1, wobei die Cyanoacrylatzusammensetzung weiterhin einen unterstützenden Zähigkeitsvermittler umfasst, der aus der Gruppe ausgewählt ist,
die aus den elastomerartigen Polymeren aus einem niederen Alkenmonomer und (i) Acrylsäureestern, (ii) Methacrylsäureestern oder
(iii) einem Vinylacetat Reaktionsprodukt der Kombination von Ethylen, Methylacrylat und Monomeren mit Carbonsäure-Härtungsstellen, welches nach seiner Bildung im Wesentlichen frei von Verarbeitungshilfsstoffen und Antioxidantien ist,
den Reaktionsprodukten der Kombination von Ethylen, Methylacrylat und Monomeren mit Carbonsäure-Härtungsstellen, den Dipolymeren vonEthylen und Methylacrylat, und
einem Polymerbestandteil, welcher aus Polymethylmethacrylat- und Polybutylacrylatsegmenten aufgebaut ist, und aus deren Kombinationen besteht.

10. Cyanoacrylatzusammensetzung nach Anspruch 1, wobei die Cyanoacrylatzusammensetzung weiterhin einen Beschleuniger umfasst, der aus der Gruppe ausgewählt ist, die aus Kronenethern, Cyclodextrinen, Sila-Kronenverbindungen, Calixarenen und Kronenethern besteht.

## Revendications

1. Composition de cyanoacrylate comprenant :
un composant de cyanoacrylate ; et
un composant de caoutchouc du type à noyau et enveloppe dispersé dans une matrice durcissable à base de (méth)acrylate, le composant de caoutchouc du type à noyau et enveloppe possédant une granulométrie dans la plage de 3 nm à 100 nm.

2. Composition de cyanoacrylate selon la revendication 1, dans laquelle le composant de caoutchouc du type à noyau et enveloppe est dispersé dans la matrice durcissable à base de (méth)acrylate en une quantité dans la plage de 1 % en poids à 95 % en poids.

3. Composition de cyanoacrylate selon la revendication 1, dans laquelle le composant de caoutchouc du type à noyau et enveloppe est dispersé dans la matrice durcissable à base de (méth)acrylate en une quantité dans la plage de 15 % en poids à 75 % en poids.

4. Composition de cyanoacrylate selon la revendication 1, dans laquelle le composant de caoutchouc du type à noyau et enveloppe est dispersé dans la matrice durcissable à base de (méth)acrylate en une quantité dans la plage de 20 % en poids à 60 % en poids.

5. Composition de cyanoacrylate selon la revendication 1, dans laquelle la dispersion composant de caoutchouc du type à noyau et enveloppe/matrice durcissable à base de (méth)acrylate est présente avec le composant de cyanoacrylate en une quantité dans la plage de 1 % en poids à 18 % en poids.

6. Composition de cyanoacrylate selon la revendication 1, dans laquelle la dispersion composant de caoutchouc du type à noyau et enveloppe/matrice durcissable à base de (méth)acrylate est présente avec le composant de cyanoacrylate en une quantité dans la plage de 2 % en poids à 15 % en poids.

7. Composition de cyanoacrylate selon la revendication 1, dans laquelle la dispersion composant de caoutchouc du type à noyau et enveloppe/matrice durcissable à base de (méth)acrylate est présente avec le composant de cyanoacrylate en une quantité dans la plage de 4 % en poids à 12 % en poids.

8. Composition de cyanoacrylate selon la revendication 1, dans laquelle le composant de cyanoacrylate comprend un ou plusieurs membres choisis parmi le groupe constitué par au moins un monomère d'α-cyanoacrylate répondant à la formule : 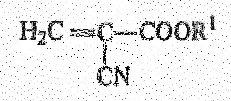 dans laquelle R¹ représente un groupe alkyle à chaîne droite ou à chaîne ramifiée contenant de 1 à 12 atomes de carbone (qui peut être substitué avec un substituant tel qu'un atome d'halogène ou un groupe alcoxy), un groupe alcényle à chaîne droite ou à chaîne ramifiée contenant de 2 à 12 atomes de carbone, un groupe alcynyle à chaîne droite ou à chaîne ramifiée contenant de 2 à 12 atomes de carbone, un groupe cycloalkyle, un groupe aralkyle ou n'importe quel groupe aryle.

9. Composition de cyanoacrylate selon la revendication 1, dans laquelle la composition de cyanoacrylate comprend en outre un corenforceur choisi parmi le groupe constitué par
- des polymères élastomères d'un monomère d'alcène inférieur et (i) d'esters d'acide acrylique, (ii) d'esters d'acide méthacrylique ou (iii) d'acétate de vinyle,
- par un produit réactionnel de la combinaison d'éthylène, d'acrylate de méthyle et d'un monomère possédant des sites de durcissement d'acides carboxyliques, qui, une fois formé est alors essentiellement exempt d'adjuvants de traitement et d'antioxydants,
- par un produit réactionnel de la combinaison d'éthylène, de méthacrylate de méthyle et de monomères possédant des sites de durcissement d'acides carboxyliques, par des dipolymères d'éthylène et d'acrylate de méthyle,
- par un composant polymère construit à partir de segments de polyméthacrylate de méthyle et de polyacrylate de butyle, et par leurs combinaisons.

10. Composition de cyanoacrylate selon la revendication 1, dans laquelle la composition de cyanoacrylate comprend en outre un accélérateur choisi parmi le groupe constitué par des éther-couronnes, des cyclodextrines, des silacouronnes, des calixarènes et des éthers-couronnes.
